**Europäisches Patentamt**

**European Patent Office**

**Office européen des brevets**

(19)

(11) Veröffentlichungsnummer: **0 308 370 B1**

(12) # EUROPÄISCHE PATENTSCHRIFT

(45) Veröffentlichungstag der Patentschrift:
27.11.91 Patentblatt 91/48

(51) Int. Cl.⁵: **B23Q 16/00**

(21) Anmeldenummer: **88810569.9**

(22) Anmeldetag: **18.08.88**

(54) **Vorrichtung zum Aufspannen eines Werkstückes oder Werkzeuges.**

(30) Priorität: **04.09.87 DE 3729601**

(43) Veröffentlichungstag der Anmeldung:
**22.03.89 Patentblatt 89/12**

(45) Bekanntmachung des Hinweises auf die
Patenterteilung:
**27.11.91 Patentblatt 91/48**

(84) Benannte Vertragsstaaten:
**AT BE CH DE ES FR GB GR IT LI LU NL SE**

(56) Entgegenhaltungen:
**DE-A- 2 715 301**
**DE-A- 3 410 359**
**DE-B- 1 008 966**
**FR-A- 1 425 476**

(56) Entgegenhaltungen:
**GB-A- 2 082 098**
**US-A- 2 782 486**
**US-A- 3 317 008**
**US-A- 3 381 554**
**US-A- 3 465 615**

(73) Patentinhaber: **Erowa AG**
**Winkelstrasse 8**
**CH-5734 Reinach (CH)**

(72) Erfinder: **Schneider, Rudolf**
**Gondiswinkel**
**CH-5734 Reinach (CH)**

(74) Vertreter: **Rottmann, Maximilian R.**
**c/o Rottmann, Maspoli + Zimmermann AG**
**Glattalstrasse 37**
**CH-8052 Zürich (CH)**

## Beschreibung

Die vorliegende Erfindung bezieht sich auf eine Vorrichtung zum positionsdefinierten Aufspannen eines Werkstückes auf einer Werkstückaufnahme oder eines Werkzeuges auf einer Werkzeugaufnahme, nach dem Oberbegriff des Patentanspruches 1.

Unter dem Begriff "positionsdefiniertes Aufspannen" wird hier im weitesten Sinn verstanden, dass der Gegenstand, namentlich ein zu bearbeitendes Werkstück oder ein Werkzeug zur Bearbeitung eines Werkstückes, in genau bekannter, definierter Lage innerhalb einer Bearbeitungsvorrichtung befestigt wird. Im besonderen soll in erster Linie eine genau definierte Lage des Gegenstandes in zwei senkrecht zueinander liegenden Richtungen, der X- und der Y-Achse, sowie bezüglich einer Verdrehung in der X/Y-Ebene erreicht werden. Schliesslich soll, bei einer Weiterbildung des Erfindungsgegenstandes, auch eine an sich weniger kritische, nichtsdestoweniger aber ebenso wichtige, definierte Positionierung in der Z-Achse gewährleistet sein.

Zum Einspannen von kleinen Werkstücken oder Werkzeugen, die im allgemeinen ebenfalls relativ geringe Abmessungen besitzen, sind Vorrichtungen bekannt, umfassend eine Werkstück- bzw. eine Werkzeugaufnahme, an welcher ein Werkstück- bzw. Werkzeugträger befestigt werden kann. Für die Positionierung sorgen dabei vorstehende Zentrierzapfen an der Aufnahme und korrespondierend angeordnete Zentrieröffnungen am Träger, in welche die Zen trierzapfen eingreifen. Wenn man einmal von einer Positionierung in Erstreckungsrichtung der Z-Achse absieht, genügt es dabei, zwei jeweils miteinander zusammenarbeitende Zapfen/Öffnungs-Paare vorzusehen, wobei das eine Paar die Positionsbestimmung in X- und Y-Richtung und das Zusammenwirken der beiden Paare die Winkelposition um die Z-Achse festlegen.

Eine wesentliche Voraussetzung bei solchen bekannten Aufspannvorrichtungen ist, dass die Zentrierzapfen einerseits und die Zentrieröffnungen andererseits bezüglich ihrer relativen Lage zueinander sehr präzise angeordnet sind, damit eine einwandfreie Zusammenarbeit von Zapfen und Öffnungen und damit die gewünschte Positionierung des Trägers in Bezug auf die (in ihrer Lage bekannten) Aufnahme gewährleistet ist. Dies bringt einen hohen Fertigungsaufwand und damit grosse Kosten mit sich, insbesondere, wenn aussergewöhnlich hohe Anforderungen an die Positioniergenauigkeit gestellt werden, wie es z.B. im Fall der elektroerosiven Bearbeitung von Werkstücken der Fall ist. Ausserdem ist eine solche Anordnung oft geometrisch überbestimmt, namentlich wenn, wie in den meisten Fällen, konische Zentrierzapfen Verwendung finden, da hier beide Zapfen/Öffnungs-Paare theoretisch unabhängig voneinander die Lage in X/Y-Richtung festlegen.

Besonders gravierend wirken sich diese Nachteile aus, wenn verhältnismässig grosse Werkstücke aufgespannt werden sollen. Im Interesse einer stabilen Lage sind die einzelnen Zentrierzapfen bzw. Zentrieröffnungen möglichst weit voneinander entfernt anzuordnen. Dabei machen sich bereits im Bereich von 20-40 cm Distanz zwischen den einzelnen Zapfen/Öffnungs-Paaren durch thermische Ausdehnung bzw. Kontraktion hervorgerufene Abweichungen bemerkbar, die einen einwandfreien Sitz des einen oder anderen Zentrierzapfens in der zugeordneten Zentrieröffnung beeinträchtigen. Die Folge davon ist, dass die namentlich im Werkzeugbau geforderte, äusserst hohe Positionsgenauigkeit nicht mehr gewährleistet ist.

Ein weiteres Problem stellt sich dann, wenn auf ein und derselben Aufnahme verschiedene Träger befestigt werden sollen, die möglicherweise aus unterschiedlichen Herstellungs-Serien stammen und deshalb, wenn auch kleine, so doch bei äusserst hohen Präzisionsanforderungen spürbare Dimensionsabweichungen besitzen. Aus den zuvor genannten Gründen ist eine exakte Lagepräzision wiederum nicht gewährleistet.

Aus der DE 3115586 A1 ist eine Palettenwechsel- und Zentriervorrichtung für eine Werkzeugmaschine bekannt geworden, die eine Zufuhrbahn umfasst, auf der die mit dem Werkstück beladenen Paletten zu einer Palettenaufnahme- und Werkstückbearbeitungsstation gelangen. Wenn die Palette dort angelangt ist, wird die Station abgesenkt, bis die Palette einerseits auf der Oberfläche von Z-Achsen-Zentrierstiften aufliegt, die jedoch keine Zentrierfunktion in X-, Y- oder Winkelrichtung ausüben. Beim Absenken der Station greifen andererseits konisch ausgebildete Oberkanten von Zentrierstiften in entsprechend konisch ausgebildete Büchsen ein. Die Büchsen sind in achsialer Richtung federnd, in radialer Richtung jedoch starr gelagert. Damit soll eine "genaue Ausfluchtung der Palette auf dem Festlegungsstift in radialer Richtung" erreicht werden.

Mit dieser Anordnung ist es nicht möglich, eine genaue Zentrierung in X/Y-Richtung und bezüglich der Winkellage zu erreichen, namentlich wenn die Achsabstände der Zentrierstifte einerseits und der Büchsen andererseits nicht exakt übereinstimmen. Wenn nämlich der Abstand zwischen den Zentrierstiften einerseits und den Büchsen andererseits nicht ganz genau übereinstimmt, ist die Lage der Palette undefiniert, da je nach Ausgangslage der Palette vor dem Eingreifen der Stifte in die Büchsen entweder das eine Stift-Büchsen-Paar oder das andere definiert ineinandergreift; dies resultiert aber zwangsläufig in zwei unterschiedlichen Positionen der Palette, was erfindungsgemäss eben vermieden werden soll.

Die DE-AS 1008966 beschreibt eine federnde Aufhängung bzw. Lagerung eines ersten Maschinenteils gegenüber einem zweiten Maschinenteil, um mit geringen Kräften, unter Ausschaltung der Wirkung der Haftreibung, eine Feinpositionierung des einen Maschinenteils unter Einwirkung von zu kontrollierenden Verschie-

2

bekräften durchzuführen. Wenn die gewünschte Lage erreicht ist, z.B. durch manuelles oder motorisches Verschieben des einen Maschinenteils, werden die beiden relativ zueinander beweglichen Maschinenteile, z.B. mittels eines Elektromagneten, gegeneinander geklemmt. In dieser Veröffentlichung ist also gar nicht das Problem gestellt, zwei Teile zwangsläufig in Bezug zueinander in eine bestimmte Position zu bringen noch ist eine Lösung hierfür angegeben.

Aus der DE 3410359 A1 geht lediglich der Gedanke hervor, dass an einer Palette separat ausgebildete Tragleisten befestigt sind, die gegebenenfalls bezüglich ihrer Lage relativ zur Palette eingestellt werden können. Das Zentrierproblem im Sinne der vorliegenden Erfindung ist überhaupt nicht angesprochen.

Aus der US-A-3381554 aus der sich der nächstliegende Stand der Technik ergibt schliesslich ist eine Lösung bekannt, bei welcher ein zylindrisch ausgebildetes Zapfen-Öffnungs-Paar die Lage in der X- und Y-Richtung bestimmt, während ein zweites Zapfen-Öffnungs-Paar einen zylindrischen Zapfen und eine langlochartige Öffnung umfassen, um die Verdrehungs-Position zu bestimmen. Der zweite Zapfen kann dabei in Richtung der Verbindungslinie der beiden Zapfen beweglich angeordnet sein. Dies ist eine konstruktiv sehr aufwendige Lösung und die Genauigkeit der Positionierung hängt im Prinzip nur von der Genauogkeit der Bearbeitung der Zapfen, der Genauigkeit der Ausbildung des Langlochs und gegebenenfalls der Präzision der Längsführung des beweglichen Zapfens ab.

Es ist die Aufgabe der vorliegenden Erfindung, die vorstehend genannten Nachteile zu vermeiden und eine Vorrichtung der im Oberbegriff des Patentanspruches 1 genannten Art derart weiterzubilden, dass auch bei verminderter Präzision bei der Herstellung der Aufnahme bzw. des Trägers, namentlich bezüglich des gegenseitigen Abstandes der Zentrierzapfen bzw. Zentrieröffnungen, sowie unter dem Einfluss thermisch bedingter Abmessungsänderungen von Träger und/oder Aufnahme die erwünschte, hohe Positioniergenauigkeit des Trägers auf der Aufnahme erreicht bzw. aufrechterhalten wird.

Diese Aufgabe wird durch die im Kennzeichen des Patentanspruches 1 angegebenen Massnahmen gelöst. Insbesondere ist damit gewährleistet, dass z.B. im Fall von zwei Zapfen/Öffnungs-Paaren das eine Paar lediglich die Aufgabe der X/Y-Positionierung übernimmt und damit die Referenz für die Z-Achse festlegt, währenddem das andere Zapfen/Öffnungs-Paar den Träger bezüglich seiner Verdrehungs-Ausrichtung um die Z-Achse herum positioniert. Der gegenseitige Abstand zwischen den beiden Zapfen/Öffnungs-Paaren wird somit dadurch unkritisch, dass das eine Paar bezüglich des anderen Paares abstandsmässig federnd verschiebbar ist. Als Folge davon werden Herstellungstoleranzen, thermische Dimensionsänderungen und dgl. aufgefangen bzw. kompensiert und eine geometrische Überbestimmung der Position des Trägers auf der Aufnahme vermieden.

Obwohl an sich jede geeignete Art der federnd verschieblichen Anordnung der beweglichen Zentrieröffnung am Werkstück- oder Werkzeugträger vorstellbar ist, erscheint es doch vorteilhaft, die bewegliche Zentrieröffnung in einem Teilbereich des Trägers vorzusehen, der gegenüber der festen Zentrieröffnung federnd mit dem Träger verbunden ist, zumal es sich bei der Verschiebebewegung der beweglichen Zentrieröffnung um betragsmässig geringe Distanzen in der Grössenordnung von vielleicht einigen 1/100 mm oder schlimmstenfalls 1/10 mm handelt.

Im Sinne der Erfindung, die angestrebte Verschiebbarkeit in einer Richtung und gleichzeitig Starrheit in einer senkrecht dazu verlaufenden Richtung zu realisieren, sind für die Verbindung zwischen dem verschieblichen Teilbereich, der die bewegliche Zentrieröffnung aufnimmt, und dem Werkstück oder Werkzeugträger blattfederartige Elemente vorzusehen, die insbesondere bei den kleinen Federwegen, die hier zur Diskussion stehen, ein nahezu ideales, lineares Biegeverhalten bei gleichzeitig hoher Steifigkeit in Längserstreckungsrichtung zeigen. Dazu kommt, dass diese Elemente nur im Moment des Aufspannens des Trägers auf der Aufnahme und dabei nur mechanisch gering beansprucht werden, indem sie lediglich die elastische Führung des beweglichen Teilbereichs des Trägers übernehmen müssen, währenddem die vergleichsweise hohen Spannkräfte vom Werkstückoder Werkzeugträger selbst aufgenommen werden.

Um die zuvor geschilderten, vorteilhaften Eigenschaften solcher blattfederartigen Elemente im Sinne des Erfindungsgedankens optimal auszunutzen, ist es angezeigt, diese Elemente senkrecht zur Verbindungslinie zwischen der beweglichen Zentrieröffnung und einer weiteren, gegenüber dem Träger starren Zentrieröffnung verlaufend anzuordnen.

Obwohl an sich gesonderte Blattfederelemente vorgesehen werden können, die am beweglichen Bereich und am Träger befestigt werden können, erscheint es vorteilhaft, diese Elemente durch einstückig angeformte Materialstege des Trägers zu bilden ; dies kann z.B. dadurch geschehen, dass eine Anzahl geeignet angeordneter, schmaler Schlitze vorzugsweise durch Drahterosion in den Träger oder in ein mit diesem verbundenes Hilfselement geschnitten werden, um den beweglichen Teilbereich vom eigentlichen Werkstück- oder Werkzeugträger kinematisch abzugrenzen.

Wie bereits erwähnt, ist eine besonders vorteilhafte Lösung der erfindungsgemäss gestellten Aufgabe darin zu sehen, dass der Werkstück- oder Werkzeugträger eine erste, starre, mit einem ersten Zentrierzapfen an der Aufnahme zusammenwirkende Zentrieröffnung sowie eine zweite, federnd bewegliche, mit einem zweiten Zentrierzapfen an der Aufnahme zusammenwirkende Zentrieröffnung aufweist. Das erste Zapfen/Öffnungs-Paar dient dabei als X/Y-Referenz für die Bearbeitung eines Werkstückes, während das zweite Zapfen/Öffnungs-Paar die Winkelstellung des Trägers um die Z-Achse herum festlegt.

Grundsätzlich ist es zwar möglich, den Werkstück- oder Werkzeugträger selbst zweiteilig auszubilden, mit einem ersten, eigentlichen Trägerteil, in dem die starre Zentrieröffnung ausgebildet ist, und einem zweiten, dazu im vorerwähnten Sinne federnd verschiebbaren Teil, der die zweite, bewegliche Zentrieröffnung aufnimmt; zweckmässiger erscheint es aber, am Werkstück- oder Werkzeugträger zwei Zentrierbalken im Abstand zueinander anzuordnen, von denen der eine die starre und der andere die federnd bewegliche Zentrieröffnung aufnimmt. Diese Massnahme lässt in der Gestaltung des Trägers an sich wesentlich mehr Spielraum, wobei mit verschieden ausgebildeten Trägern immer gleiche bzw. einheitliche Zentrierbalken verwendet werden können.

Eine bevorzugte Ausführungsform solcher am eigentlichen Werkstück- oder Werkzeugträger zu befestigender Zentrierbalken geht aus den Ansprüchen 7 bis 10 hervor.

Die Zentrierzapfen bestehen vorzugsweise aus Hartmetall und sind endseitig mit mindestens einem, besser aber mit zwei konischen Oberflächenbereichen versehen, nämlich einem ersten, schwach konischen Oberflächenbereich, der zur eigentlichen Zentrierung dient, und einem endseitig daran anschliessenden, stärker konischen Bereich, der die Einführung des Zentrierzapfens in die zugeordnete Zentrieröffnung erleichtert.

Durch die Massnahme, dass die Zentrierzapfen eine zentrale Durchgangsbohrung aufweisen, die mit einer Druckluftquelle in Verbindung steht, kann ein sehr wirkungsvoller Reinigungseffekt erzielt werden, indem während des Eintauchens des Zapfens in die Zentrieröffnung Druckluft in diese hineingeblasen wird, die allfällige Verunreinigungen entfernt. Dies ist insbesondere dann besonders wirksam, wenn die Zentrieröffnungen durch einseitig offene Hartmetallbüchsen gebildet sind, da so während des Eintauchens der Zapfen in die Büchsen ein sich stetig verkleinernder Ringspalt entsteht, durch den die Druckluft entweichen muss; durch die Verkleinerung des Ringspaltquerschnittes erhöht sich die Strömungsgeschwindigkeit der Druckluft und damit die Reinigungswirkung.

Eine besonders präzise und zuverlässige Zentrierung lässt sich in Verbindung mit den zuvor erwähnten Zentrierzapfen erreichen, wenn ein Teil der Innenwand der Hartmetallbüchsen im Bereich ihrer Randkante, die dem Zapfen zugewandt ist, konisch aufgeweitet ist, und zwar insbesondere dann, wenn diese Konizität grösser ist als diejenige des ersten, schwach konischen Endbereiches des Zentrierzapfens. Dadurch ergibt sich praktisch eine ringförmige Linienauflage zwischen Zapfen und Büchse ohne Selbsthemmungsgefahr, die zusätzlich zur Drucklufteinblasung einen weiteren Selbstreinigungseffekt durch Abstreifung eventueller Schmutzteilchen nach sich zieht.

Ist ausserdem, wie in den meisten Fällen erforderlich, eine Lagepositionierung in Erstreckungsrichtung der Z-Achse erwünscht, kann dies mittels einer Mehrzahl von Stützzapfen erfolgen, die vom Werkstück- oder Werkzeugträger über die zuvor erwähnten Zentrierbalken hinaus abstehen und die auf Stützflächen an der Werkstück- oder Werkzeugaufnahme aufliegen; letztere können dabei zwecks Reinigung und Anwesenheitskontrolle auch mit Druckluftöffnungen versehen sein, die bei aufliegenden Stützzapfen verschlossen sind.

Im folgenden wird ein Ausführungsbeispiel der erfindungsgemässen Vorrichtung zum positionsdefinierten Aufspannen von Werkstücken näher erläutert, wobei auf die beiliegenden Zeichnungen Bezug genommen wird. In den Zeichnungen zeigen:

Fig. 1     eine Ansicht eines Werkstückträgers der erfindungsgemässen Aufspannvorrichtung von unten;

Fig. 2     eine schematische, vergrösserte Detailansicht eines Teils eines Zentrierbalkens mit gegeneinander verschobenen Bereichen;

Fig. 3     einen Schnitt entlang der Linie III-III in Fig. 1;

Fig. 4     eine stark vergrösserte, teilweise geschnittene Ansicht einer Zentrierhülse und einer Zentrierbüchse;

Fig. 5     eine schematische, teilweise geschnittene Seitenansicht der erfindungsgemässen Aufspannvorrichtung in ungespanntem Zustand; und

Fig. 6     eine schematische, teilweise geschnittene Seitenansicht der erfindungsgemässen Aufspannvorrichtung in gespanntem Zustand.

Das Ausführungsbeispiel, das im folgenden näher erläutert werden soll, ist eine Aufspannvorrichtung für ein Werkstück, das innerhalb einer Bearbeitungseinrichtung in einer genau vorgegebenen Lage in X/Y-Richtung, bezüglich einer Verdrehung um die Z-Achse sowie in Längserstreckungsrichtung der Z-Achse befestigt werden soll. Es versteht sich aber, dass das erfindungsgemässe Prinzip, mit geeigneten konstruktiven Änderungen der Vorrichtung, die jedem mit der Materie vertrauten Fachmann geläufig sein dürften, ebenso zum Aufspannen von Werkzeugen verwendet werden kann.

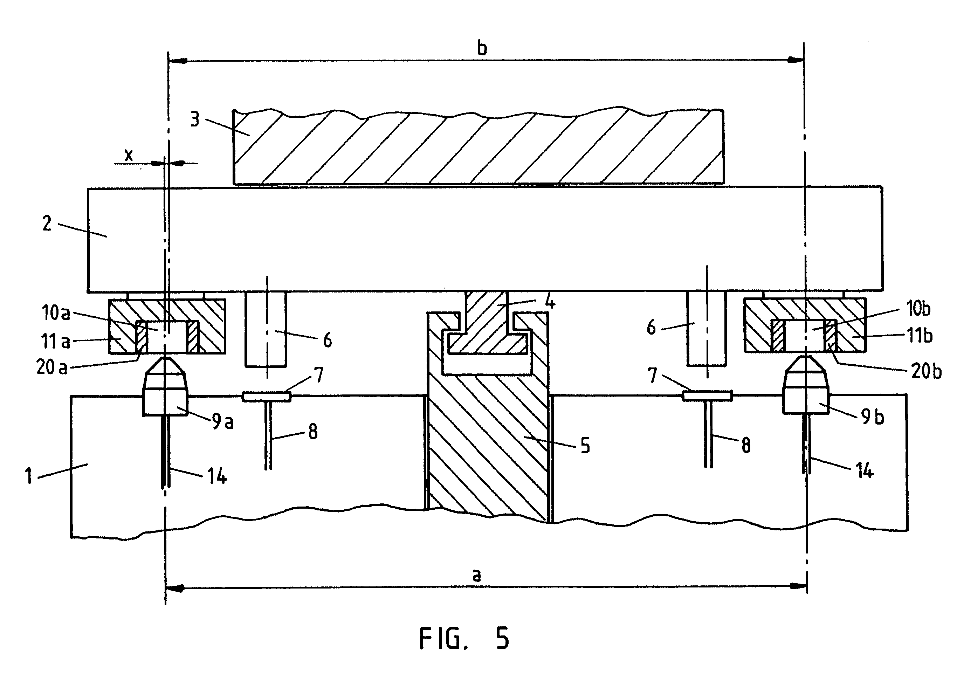

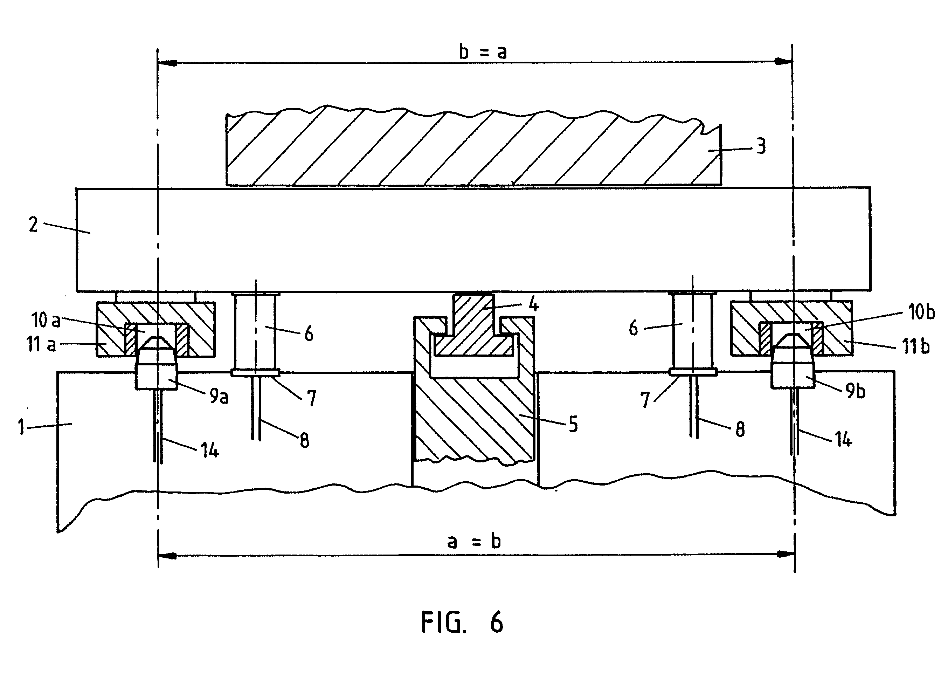

Im Überblick ist die Gesamtheit der erfindungsgemässen Aufspannvorrichtung am besten aus den schematischen Darstellungen von Fig. 5 und 6 ersichtlich. Demgemäss umfasst die Vorrichtung eine Werkstückaufnahme 1, die z.B. der Maschinentisch einer (nicht dargestellten) Bearbeitungsvorrichtung oder ein gesondertes, an der Bearbeitungsvorrichtung zu verankerndes Aufnahmeorgan sein kann. Weiter ist ein Werkstückträger 2 vorgesehen, der im Beispielsfall plattenartige Gestalt hat und mit (nicht dargestellten) Bohrungen, Nuten, Klemmorganen oder dgl. versehen sein kann, um ein zu bearbeitendes Werkstück 3 abzustützen. In besonderen Fällen kann der Werkstückträger 2 durch das Werkstück 3 selbst gebildet sein.

Um den Werkstückträger 2 an der Werkstückaufnahme 1 zu befestigen, ist eine Befestigungseinrichtung vorgesehen, die im Beispielsfall einen schematisch angedeuteten, im Querschnitt umgekehrt T-förmig ausgebildeten Befestigungsbalken 4, der an der Unterseite des Werkstückträgers 2 befestigt ist, und einen Verankerungskolben 5 umfasst, der mit seiner Oberseite den Befestigungsbalken 4 mit Spiel umgreift, damit die angestrebte Zentrierung voll zur Wirkung kommen kann. Durch Abwärtsbewegen des Verankerungskolbens 5 wird der gesamte Werkstückträger 2 gegen die Aufnahme 1 gezogen und arretiert, wie noch zu erläutern sein wird.

Die Höhenlage des Werkstückträgers 2 gegenüber der Werkstückaufnahme 1 und damit die Position in Z-Richtung wird durch im Beispielsfall vier Stützzapfen 6 bestimmt, die einerends am Werkstückträger 2 befestigt sind und sich andernends auf Stützflächen 7 der Werkstückaufnahme 1 abstützen. An sich genügen jedoch drei Stützzapfen 6, um den Träger 2 bezüglich der Aufnahme 1 definiert und eindeutig bestimmt in Z-Richtung zu positionieren. In der Werkstückaufnahme 1 sind an eine Druckluftquelle angeschlossene Bohrungen 8 vorgesehen, die in den Stützflächen 7 münden und einerseits dazu dienen, allfällig such auf den Stützflächen 7 ansammelnden Schmutz wegzublasen, wenn sich die Stützzapfen 6 den Stützflächen 7 nähern ; andererseits werden die Mündungen der Bohrungen 8 verschlossen, sobald die Stützzapfen 6 auf den Stützflächen 7 aufliegen, was als Anwesenheitskontrolle für einen Werkstückträger ausgewertet werden kann.

Zur Lagezentrierung des Werkstückträgers 2 auf der Aufnahme 1 besitzt letztere im Beispielsfall zwei Zentrierzapfen 9a und 9b die in die Oberfläche der Werkstückaufnahme 1 eingelassen sind und mit ihrem konischen Endbereich über die Oberfläche überstehen. Auf die nähere Ausbildung der Zentrierzapfen wird weiter unten noch eingegangen werden. Die Zentrierzapfen 9 arbeiten mit Zentrieröffnungen 10a und 10b zusammen, die sich im Prinzip an der Werkstückaufnahme 2 befinden, genauer gesagt in je einem Zentrierbalken 11a und 11b, die beide im Abstand zur unteren Fläche des Werkstückträgers 2 an diesem befestigt sind. Auch auf die Ausbildung der Zentrierbalken 11a und 11b wird noch näher eingegangen werden.

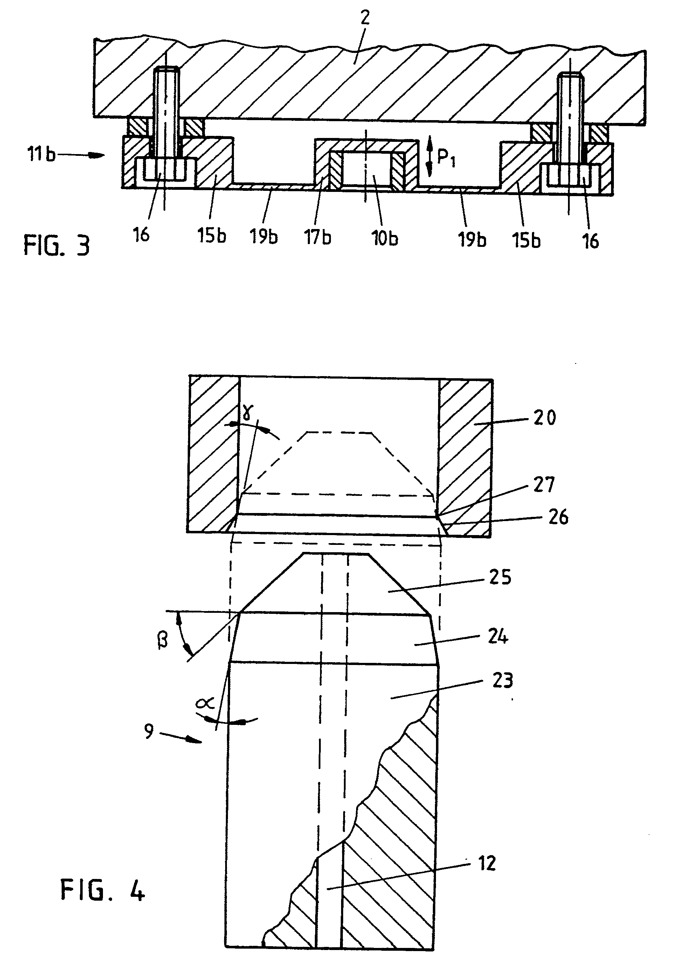

Die Zentrierzapfen 9a und 9b besitzen eine zentrale Durchgangsbohrung 12 (vgl. Fig. 4), die mit Druckluftkanälen 14 in der Werkstückaufnahme 1 kommunizieren und ebenfalls dazu dienen, bei Einführung des Zentrierzapfens 9 in die zugeordnete Öffnung 10 Verunreinigungen zu entfernen.

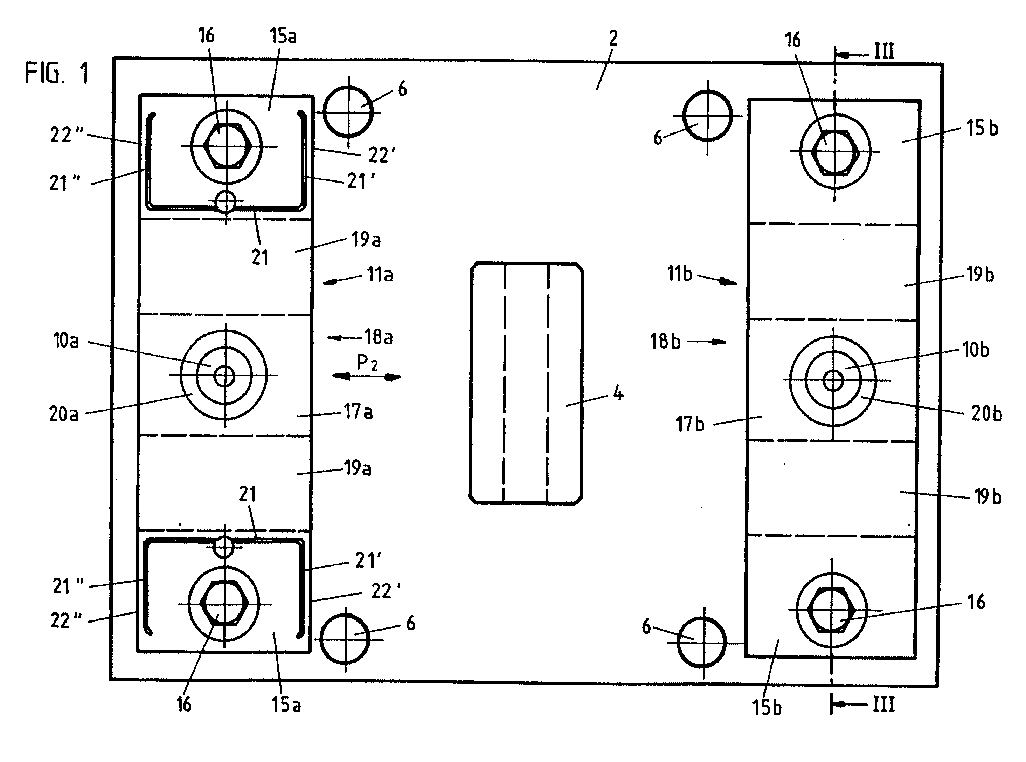

Die Ausbildung der Zentrierbalken 11a und 11b geht aus den Fig. 1 bis 3 hervor. Jeder der beiden Zentrierbalken 11a und 11b besitzt generell längliche Gestalt und ist mit seinen beiden Endteilen 15a bzw. 15b an der Unterseite des Werkstückträgers 2 befestigt, z.B. mittels Schrauben 16. In der Mitte der Zentrierbalken 11a und 11b ist ein Mittelteil 18a bzw. 18b mit einem zentralen Bereich 17a bzw. 17b vorgesehen, der gegenüber den an die Endteile 15a bzw. 15b angrenzenden Randbereichen 19a bzw. 19b des Mittelteils 18a bzw. 18b verdickt ist. Dadurch kann der Mittelteil 18a bzw. 18b gegenüber den Endteilen 15a bzw. 15b und damit gegenüber dem Werkstückträger 2 federn, und zwar lediglich in Z-Richtung, d.h. gegen den Werkstückträger 2 hin und von diesem weg, in Richtung des Doppelpfeiles $P_1$ in Fig. 3.

Die Zentrieröffnungen 10a bzw. 10b sind in den Mittelteilen 18a bzw. 18b angeordnet und werden durch Hartmetallbüchsen 20a bzw. 20b gebildet, die in entsprechende Öffnungen der Mittelteile 18a bzw. 18b eingelassen sind. Auf die genaue Ausbildung der Büchsen 20a bzw. 20b wird im Zusammenhang mit Fig. 4 noch näher eingegangen werden.

Der Zentrierbalken 11b ist abgesehen von seinem Vermögen, mit seinem Mittelteil 18b in Z-Richtung zu federn, starr ausgebildet, namentlich starr in der X- und Y-Richtung. Der Mittelteil 18a inklusive seiner Randbereiche 19a des Zentrierbalkens 11a hingegen ist verschiebbar, und zwar in Richtung des Doppelpfeiles $P_2$ in Fig. 1, d.h. in einer Richtung, die auf der Verbindungslinie zwischen der Zentrieröffnung 10a und der Zentrieröffnung 10b liegt. Eine Verschieblichkeit des Mittelteils 18a hingegen in einer senkrecht dazu verlaufenden Richtung ist ausgeschlossen. Dies kann gemäss dem dargestellten Beispiel wie folgt erreicht werden :

Beide Endteile 15a des Zentrierbalkens 11a sind mit einem im wesentlichen U-förmigen, durchgehenden Schlitz versehen, zusammengesetzt aus den Schlitzschenkeln 21, 21′ und 21″. Die beiden Schlitzschenkel 21′ und 21″ verlaufen nahe der seitlichen Randkanten der Endteile 15a, während der jene beiden Schlitzschenkel verbindende Schlitzschenkel 21 nahe an und entlang der Grenze zwischen Randteil 15a und Randbereich 19a des Mittelteiles 18a verläuft. Dadurch sind pro Endteil 15a zwei blattfederartige Elemente 22′ und 22″ gebildet, die senkrecht zu Verschiebungsrichtung des Mittelteiles 18a, d.h. senkrecht zum Pfeil $P_2$ verlaufen und die Randteile 15a mit dem Mittelteil 18a, insbesondere mit dessen Randbereichen 19a, verbinden. Diese blattfederartigen Elemente 22' und 22″ sind im Beispielsfall durch Materialstege zwischen den Schlitzschenkeln 21' bzw. 21″ und der Randkante der Endteile 15a gebildet und sind auf Grund ihrer Ausbildung und Anordnung in Längserstreckungsrichtung sehr starr, senkrecht dazu jedoch sehr flexibel, zumal es sich bei den hier geforderten Auslenkungen um minimale Beträge von einigen 1/100 mm bis vielleicht 1/10 mm handelt.

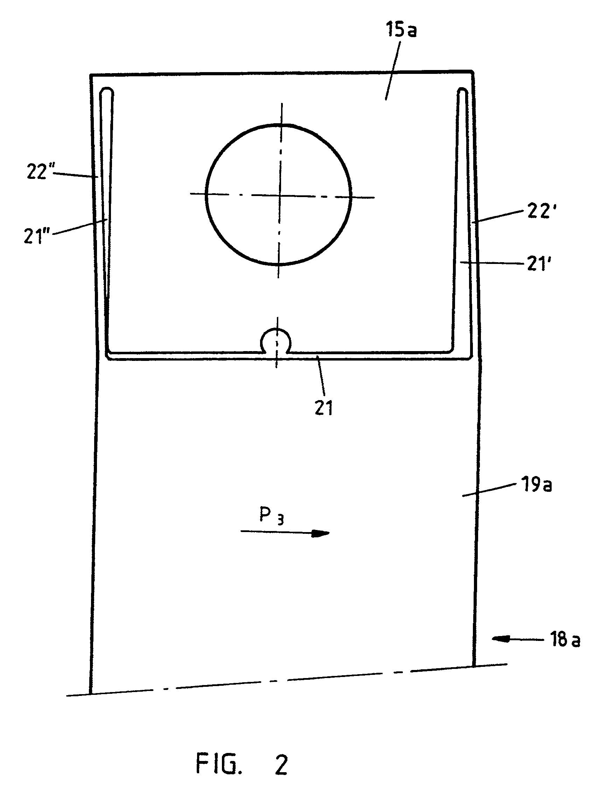

In der Fig. 2 sind ausschnittweise und zwecks Verdeutlichung etwas übertrieben die Verhältnisse dargestellt, wenn das Mittelteil 18a extrem in Richtung des Pfeiles $P_3$ verschoben wird. In der Praxis sind die geforderten Auslenkungen andererseits nur minimal. Wie aus jener Zeichnung zu sehen ist, hat sich der Schlitzschenkel 21″ an seinem dem Schlitzschenkel 21 benachbarten Ende völlig geschlossen und das untere Ende des blattfederartigen Elementes 22″ stösst am Endteil 15a an, währenddem sich der Schlitzschenkel 21' an seinem dem Schlitzschenkel 21 benachbarten Ende in entsprechendem Mass geöffnet hat. Am gegenüberliegenden Ende des Zentrierbalkens 11a sind die Verhältnisse natürlich symmetrisch zu dessen Zentrum gleich, so dass eine parallele Verschiebung des Mittelteils 18a in Richtung des Pfeiles $P_3$ resultiert. Eine Verschiebung des Mittelteiles 18a senkrecht dazu ist jedoch ausgeschlossen, da die blattfederartigen Elemente 22' und 22″ in Längserstrekkungsrichtung genügend starr sind, einer solchen Verschiebung entgegenzuwirken.

Wenn die die Verschiebung des Mittelteils 18a bewirkende Kraft zu wirken aufhört, kehrt der Mittelteil 18a selbsttätig in seine Ausgangslage zurück, wie sie in Fig. 1 dargestellt ist, da sich die Materialstege 22' und 22″ federnd verhalten.

Die Ausbildung der Zentrierzapfen 9 und der Zentrierbüchsen 20 sowie deren Zusammenwirken geht aus der Fig. 4 hervor. Die Zentrierzapfen 9 sind vorzugsweise aus Hartmetall gefertigt und besitzen einen zylindrischen Grundkörper 23 sowie zwei endseitige, sich konisch verjüngende Oberflächenbereiche 24 und 25. Der eine konische Endbereich 24, der die eigentliche Zentrieraufgabe erfüllt, ist relativ schwach konisch, z.B. mit einem Winkel $\alpha$ von etwa 8°, während der andere, stirnseitige, konische Endbereich, der in erster Linie dazu dient, das Einführen des Zentrierzapfens 9 in die zugeordnete Zentrieröffnung zu erleichtern, stärker konische ist, mit einem Winkel $\beta$ von etwa 45°. Wie bereits erwähnt besitzt der Zentrierzapfen 9 eine zentrale Durchgangsbohrung 12 zur Zufuhr von Druckluft.

Die Zentrierbüchse 20 besitzt einen Randkantenbereich 26, in dem die Büchse 20 konisch aufgeweitet ist. Der Konuswinkel $\gamma$ beträgt hier etwa 15°, jedenfalls aber mehr als derjenige des konischen Oberflächenbereichs 24 des Zapfens 9. Die Durchmesserverhältnisse von Zapfen 9 und Büchse 20 sind dabei so gewählt, dass bei Einführung des Zapfens 9 in die Büchse 20 der konische Oberflächenbereich 24 des Zapfens 9 auf die Kante 27 im Übergang vom konisch aufgeweiteten Bereich 26 der Büchse 20 zu deren zylindrischer Innenwandfläche aufliegt.

Da die in den Mittelteil 18a bzw. 18b des Zentrierbalkens 11a bzw. 11b eingesetzte Büchse 20a bzw. 20b einseitig verschlossen ist (vgl. Fig. 4), entsteht bei zunehmendem Einführen des Zapfens 9 in die Büchse 20 als einzige Öffnung ein Ringspalt, der sich stetig verkleinert. Die durch die Bohrung 12 einströmende Druckluft entweicht mit zunehmend höherer Strömungsgeschwindigkeit durch diesen Ringspalt und bläst so alle Verunreinigungen weg, die sich an der erwähnten Kante 27 und am konischen Oberflächenbereich 24 des Zapfens 9 befinden könnten.

In der Fig. 5 ist die Situation dargestellt, wo der Werkstückträger 2 mit seinem Befestigungsbalken 4 in den Verankerungszylinder 5 eingeführt wurde, kurz vor dem Herunterziehen auf die Werkstückaufnahme 1. Dabei stimmt die Distanz a zwischen den Zentren der beiden Zentrierzapfen 9a und 9b mit der Distanz b zwischen den Zentren der beiden Zentrieröffnungen 10a und 10b nicht überein, z.B. infolge fabrikatorischer Toleranzen oder wegen Temperaturunterschieden zwischen Werkstückträger 2 und Werkstückaufnahme 1. Dies macht sich in einer Differenz x bemerkbar, die allerdings in der Praxis sehr klein und in der Zeichnung nach Fig. 5 stark übertrieben dargestellt ist.

Wenn nun der Werkstückträger 2 von der Lage gemäss Fig. 5 weiter abgesenkt und schliesslich in der Lage gemäss Fig. 6 gespannt wird, muss diese Abstandsdifferenz x kompensiert werden.

Dies geschieht dadurch, dass sich der eine, starre Zentrierbalken 11b unter Wirkung des Zapfens 9b und der Büchse 20b genauestens auf eine definierte X/Y-Position einstellen wird, die als Referenzposition für die Bearbeitungsmaschine dient. Beim anderen Zentrierbalken 11a hingegen wird sich der Mittelteil 18a um die Abstandsdifferenz x entlang der Verbindungslinie zwischen den beiden Zentrieröffnungen 10a und 10b verschieben, wie es vorstehend erläutert wurde, bis der Zapfen 9a genau in der Büchse 20a zentriert ist. Da der Zentrierbalken 11a senkrecht zu dieser Verschiebungsrichtung starr ist, wird der gesamte Werkstückträger 2 um die zentrale Achse von Zapfen 9b/Büchse 20b, d.h. die X/Y-Referenzachse, soweit verdreht, bis die erwünschte Winkellage des Werkstückträgers 2 und damit des Werkstückes 3 erreicht ist. Schliesslich ist die Lage gemäss Fig. 6 erreicht, in der die Stützzapfen 6 auf den Stützflächen 7 aufliegen, so dass auch eine Lagedefinition in der Z-Achse gegeben ist.

Während des zuvor beschriebenen Zentriervorganges federn die Mittelteile 18a bzw. 18b der beiden Zentrierbalken 11a bzw. 11b etwas gegen den Werkstückträger 2 hin, also in Richtung der Z-Achse. Dies hat auf die Genauigkeit keinen Einfluss, sondern fördert die satte Auflage des konischen Oberflächenbereichs 24 des Zapfens 9 auf der Kante 27 der Büchse 20. Damit diese Einfederbewegung stattfinden kann, sind die beiden Zentrierbalken 11a und 11b etwas im Abstand zur Unterseite der Werkstückaufnahme 2 angeordnet, wie dies aus Fig. 2 deutlich ersichtlich ist. Es versteht sich aber, dass zur Erreichung des gleichen Zwecks in der Unterseite der Werkstückaufnahme 2 Vertiefungen vorgesehen sein könnten.

## Patentansprüche

1. Vorrichtung zum positionsdefinierten Aufspannen eines Werkstückes (3) auf einer Werkstückaufnahme (1) oder eines Werkzeuges auf einer Werkzeugaufnahme, bei welcher die Werkstück- oder Werkzeugaufnahme (1) mit mindestens zwei vorstehenden Zentrierzapfen (9a, 9b) versehen ist, die in korrespondierend an einem Werkstück- oder Werkzeugträger (2) angeordnete Zentrieröffnungen (10a, 10b) einzugreifen bestimmt sind, und mit Verbindungsmitteln (4, 5) zum Befestigen des Werkstück- oder Werkzeugträgers (2) an der Werkstück- oder Werkzeugaufnahme (1), dadurch gekennzeichnet, dass zumindest ein eine Zentrieröffnung (10a) tragendes Element des Werkstück- oder Werkzeugträgers (2) mit Bezug auf mindestens eine weitere, im Abstand davon fest am Werkstück- oder Werkzeugträger angeordnete Zentrieröffnung (10b) in einer sich im wesentlichen entlang der Verbindungslinie zwischen den beiden besagten Zentrieröffnungen (10a, 10b) oder parallel dazu erstreckenden Richtung federnd beweglich, senkrecht zu jenen Richtungen jedoch starr angeordnet ist, wobei die Verbindung zwischen der festen Zentrieröffnung (10b) und dem die bewegliche Zentrieröffnung (10a) tragenden Element über blattfederartige Elemente (22', 22") erfolgt.

2. Vorrichtung nach Patentanspruch 1, dadurch gekennzeichnet, dass sich die blattfederartigen Elemente (22', 22") senkrecht zur Verbindungslinie zwischen der Zentrieröffnung des beweglichen Elementes (10a) und der weiteren Zentrieröffnung (10b) erstrecken.

3. Vorrichtung nach Patentanspruch 2, dadurch gekennzeichnet, dass die blattfederartigen Elemente (22', 22") durch einstückig sowohl am federnden Teil (17a) als auch am Werkstück- oder Werkzeugträger (2) angeformte Materialstege gebildet sind.

4. Vorrichtung nach einem der vorangehenden Patentansprüche, dadurch gekennzeichnet, dass der Werkstück- oder Werkzeugträger (2) ein erstes, starres Element mit einer mit einem ersten Zentrierzapfen (9b) zusammenwirkenden Zentrieröffnung (10b) und ein zweites, bewegliches Element mit einer mit einem zweiten Zentrierzapfen (9a) zusammenwirkenden Zentrieröffnung (10a) umfasst.

5. Vorrichtung nach Patentanspruch 4, dadurch gekennzeichnet, dass die erste Zentrieröffnung (10b) in einem ersten Zentrierbalken (11b) des Werkstück- oder Werkzeugträgers (2) und die zweite Zentrieröffnung (10a) in einem zweiten Zentrierbalken (11a) des Werkstück- oder Werkzeugträgers (2) ausgebildet sind.

6. Vorrichtung nach Patentanspruch 5, dadurch gekennzeichnet, dass die beiden Zentrierbalken (11a, 11b) im Abstand zueinander und mit Abstand zum Werkstück- oder Werkzeugträger (2) an diesem befestigt sind.

7. Vorrichtung nach Patentanspruch 6, dadurch gekennzeichnet, dass einer der beiden Zentrierbalken (11a) zwei starr mit dem Werkstück- oder Werkzeugträger (2) verbundene Endteile (15a) sowie einen gegenüber dem Werkstück- oder Werkzeugträger federnd deformierbaren Mittelteil (18a, 18b) aufweist.

8. Vorrichtung nach Patentanspruch 7, dadurch gekennzeichnet, dass die erste und zweite Zentrieröffnung (10b, 10a) jeweils in einem Mittelteil (18b, 18a) des ersten bzw. zweiten Zentrierbalkens (11b, 11a) gelegen ist.

9. Vorrichtung nach Patentanspruch 8, dadurch gekennzeichnet, dass der Mittelteil (18a) des zweiten Zentrierbalkens (11a) gegenüber seinen beiden Endteilen (15a) in Richtung zum Mittelteil (18b) des ersten Zentrierbalkens (11b) hin und von diesem weg federnd verschiebbar ist.

10. Vorrichtung nach den Patentansprüchen 5 bis 9, dadurch gekennzeichnet, dass die Mittelteile (18a, 18b) der beiden Zentrierbalken (11a, 11b) je einen gegenüber den an die Endteile (15a, 15b) angrenzenden Randbereichen (19a, 19b) verdickten, zentralen Bereich (17a, 17b) besitzen, in dem die jeweilige Zentrieröffnung (10a, 10b) ausgebildet ist.

11. Vorrichtung nach Patentanspruch 10, dadurch gekennzeichnet, dass die Zentrierzapfen (9a, 9b) aus Hartmetall bestehen und einen kopfseitigen, schwach konischen (24) und einen endseitig daran anschliessenden, stärker konischen Endbereich (25) aufweisen.

12. Vorrichtung nach Patentanspruch 11, dadurch gekennzeichnet, dass die Zentrierzapfen (9a, 9b) eine zentrale Durchgangsbohrung (12) aufweisen, die mit einer Druckluftquelle in Verbindung steht.

13. Vorrichtung nach einem der vorangehenden Patentansprüche, dadurch gekennzeichnet, dass die Zentrieröffnungen (10a, 10b) durch zumindest einseitig offene Hartmetallbüchsen (20a, 20b) gebildet sind, die in die jeweiligen verdickten, zentralen Bereiche (17a, 17b) der Zentrierbalken (11a, 11b) eingelassen sind.

14. Vorrichtung nach Patentanspruch 12, dadurch gekennzeichnet, dass ein Teil (26) der Hartmetallbüchsen-Innenwand im Bereich der dem Zentrierzapfen (9a, 9b) zugewandten Randkante konisch aufgeweitet und dass die Konizität des konisch aufgeweiteten Teils (26) der Hartmetallbüchsen-Innenwand grösser ist als die Konizität des kopfseitigen, schwach konischen Endbereiches (24) des Zentrierzapfens (9a, 9b).


## Claims

1. A device for the position-defined clamping of a workpiece (3) on a workpiece holder (1) or of a tool on a tool holder, in which the workpiece or tool holder (1) is provided with at least two projecting locating pins (9a, 9b) intended to engage in corresponding locating holes (10a, 10b) arranged in a workpiece or tool carrier (2) and further provided with connecting means (4, 5) for attaching the workpiece or tool carrier (2) to the workpiece or tool holder (1), characterized in that at least one element of the workpiece or tool carrier (2) bears a locating hole which in relation to at least one other locating hole (10b) spaced apart from it and fixed to the workpiece or tool carrier is spring-deflectable in a direction extending essentially along the connecting line between the said two locating holes (10a, 10b) or parallel thereto but is rigid perpendicular to those directions, and the connection between the fixed locating hole (10b) and the element bearing the deflectable locating hole (10a) is achieved by leaf-spring type elements (22', 22").

2. A device according to Claim 1 characterized in that the leaf-spring type elements (22', 22") extend perpendicular to the connecting line between the locating hole (10a) of the deflectable element and another locating hole (10b).

3. A device according to Claim 2 characterized in that the leaf-spring type elements (22', 22") are formed by webs of material integral both to the deflecting part (17a) and to the workpiece or tool carrier (2).

4. A device according to one of the preceding claims characterized in that the workpiece or tool holder (2) comprises a first rigid element with a locating hole (10b) interacting with a first locating pin (9b) and a second deflectable element with a locating hole (10a) interacting with a second locating pin (9a).

5. A device according to Claim 4 characterized in that the first locating hole (10b) is arranged in a first locating rail (11b) of the workpiece or tool carrier (2) and the second locating hole (10a) is arranged in a second locating rail (11a) of the workpiece or tool carrier (2).

6. A device according to Claim 5 characterized in that the two locating rails (11a, 11b) are attached to the workpiece or tool carrier (2) at a distance from it and from each other.

7. A device according to Claim 6 characterized in that one of the two locating rails (11a) comprises two end sections (15a) rigidly attached to the workpiece or tool carrier (2) and a middle section (18a, 18b) that is spring-deflectable in relation to the workpiece or tool carrier (2).

8. A device according to Claim 7 characterized in that the first and the second locating hole (10b, 10a) are each situated in a middle section (18b, 18a) of the first and second locating rail (11b, 11a) respectively.

9. A device according to Claim 8 characterized in that the middle section (18a) of the second locating rail (11a) is spring-deflectable in relation to its two end sections (15a) on a line towards the middle section (18b) of the first locating rail (11b) and away from it.

10. A device according to Claims 5 to 9 characterized in that the middle sections (18a, 18b) of the two locating rails (11a, 11b) each comprise a central area (17a, 17b) thicker than the intermediate sections (19a, 19b) adjacent to the end section (15a, 15b) and in which the respective locating hole (10a, 10b) is arranged.

11. A device according to Claim 10 characterized in that the locating pins (9a, 9b) are made of hard metal alloy and have a slightly tapered end section (24) at their head and an adjoining, more sharply tapered end section (25) at their extreme tip.

12. A device according to Claim 11 characterized in that the locating pins (9a, 9b) have a centre straight-through bore (12) that is connected to a compressed air supply.

13. A device according to any one of the preceding claims characterized in that the locating holes (10a, 10b) are formed by hard metal alloy sleeves (20a, 20b) that are open at one end at least and which are let into each of the thickened central areas (17a, 17b) of the locating rails (11a, 11b).

14. A device according to Claim 12 characterized in that a part (26) of the inner wall of the hard metal alloy sleeves is chamfered at the lip facing the locating pin (9a, 9b) and that the taper angle of the chamfered part (26) of the inner wall of the hard metal alloy sleeves is greater than that of the slightly tapered end section (24) at the head of the locating pins (9a, 9b).

**Revendications**

1. Dispositif pour fixer en position bien définie une pièce (3) sur un logement de pièce (1) ou un outil sur un logement d'outil, dans lequel le logement de pièce ou d'outil (1) est pourvu d'au moins deux broches de centrage en saillie (9a, 9b) qui sont destinées à s'engager dans des orifices de centrage (10a, 10b) disposés de manière correspondante dans un porte-pièce ou un porte-outil (2) et avec des moyens de liaison (4, 5) pour fixer le porte-outil ou le porte-pièce (2) sur le logement de pièce ou le logement d'outil (1), caractérisé en ce qu'au moins un élément du porte-pièce ou du porte-outil (2) comportant un orifice de centrage (10a) est monté avec possibilité de déplacement élastique par rapport à au moins un autre orifice de centrage (10b) disposé de manière fixe dans le porte-pièce ou le porte-outil, dans une direction essentiellement le long de la ligne de liaison entre les deux orifices de centrage précités (10a, 10b) ou parallèle à celle-ci mais montée toutefois de manière rigide, perpendiculairement à ces directions, tandis que la liaison entre l'orifice de centrage fixe (10b) et l'élément portant l'orifice de centrage mobile (10a) est assurée par des éléments en lame de ressort (22', 22").

2. Dispositif selon la revendication 1, caractérisé en ce que les éléments en lame de ressort (22', 22") s'étendent perpendiculairement à la ligne de liaison entre l'orifice de centrage de l'élément mobile (10a) et un autre orifice de centrage (10b).

3. Dispositif selon la revendication 2, caractérisé en ce que les éléments en lame de ressort (22', 22") sont constitués d'une pièce avec la pièce élastique (17a) sous forme de nervures de matière formées sur le porte-pièce ou le porte-outil (2).

4. Dispositif selon l'une des revendications précédentes, caractérisé en ce que le porte-pièce ou le porte-outil (2) comprend un premier élément rigide, avec un orifice de centrage (10b) coopérant avec une première broche de centrage (9b) et un deuxième élément mobile avec un orifice de centrage (10a) coopérant avec une deuxième broche de centrage (9a).

5. Dispositif selon la revendication 4, caractérisé en ce que le premier orifice de centrage (10b) est réalisé dans une première barre de centrage (11b) du porte-outil ou du porte-pièce (2) et que le deuxième orifice de centrage (10a) est réalisé dans une deuxième barre de centrage (11a) du porte-outil ou du porte-pièce (2).

6. Dispositif selon la revendication 5, caractérisé en ce que les deux barres de centrage (11a, 11b) sont fixées au porte-outil ou au porte-pièce (2) à une certaine distance par rapport à celui-ci et à distance l'une par rapport à l'autre.

7. Dispositif selon la revendication 6, caractérisé en ce que l'une des deux barres de centrage (11a) comporte deux parties terminales (15a) liées rigidement au porte-pièce ou au porte-outil (2), ainsi qu'une partie centrale (18a, 18b) pouvant se déformer élastiquement par rapport au porte-pièce ou au porte-outil.

8. Dispositif selon la revendication 7, caractérisé en ce que les premier et deuxième orifices de centrage (10b, 10a) sont situés chacun dans une partie centrale (18b, 18a) de la première ou de la deuxième barre de centrage (11b, 11a).

9. Dispositif selon la revendication 8, caractérisé en ce que la partie centrale (18a) de la deuxième barre de centrage (11a) peut se déplacer élastiquement par rapport à ses deux parties terminales (15a) en direction de la partie centrale (18b) de la première barre de centrage (11b), en s'écartant et en se rapprochant de celles-ci.

10. Dispositif selon les revendications 5 à 9, caractérisé en ce que les parties centrales (18a, 18b) des deux barres de centrage (11a, 11b) présentent une surépaisseur dans la zone centrale (17a, 17b), dans laquelle sont disposés les orifices de centrage correspondants (10a, 10b) par rapport aux zones périphériques (19a, 19b) avoisinant les parties terminales (15a, 15b).

11. Dispositif selon la revendication 10, caractérisé en ce que les broches de centrage (9a, 9b) sont réalisées en métal dur et présentent une zone terminale de tête faiblement conique (24) et une zone d'extrémité terminale qui s'y raccorde (25) qui est fortement conique.

12. Dispositif selon la revendication 11, caractérisé en ce que les broches de centrage (9a, 9b) présentent un trou de passage central (12) qui est en communication avec une source d'air comprimé.

13. Dispositif selon l'une des revendications précédentes, caractérisé en ce que les orifices de centrage (10a, 10b) sont formés par des douilles de métal dur (20a, 20b) ouvertes au moins d'un côté, qui sont insérées dans les zones centrales à surépaisseur (17a, 17b) des barres de centrage (11a, 11b).

14. Dispositif selon la revendication 12, caractérisé en ce qu'une partie (26) de la paroi intérieure des douilles en métal dur est élargie en forme de cône dans la zone du bord périphérique tournée vers la broche de centrage (9a, 9b) et que la conicité de la partie élargie en forme de cône (26) de la paroi intérieure des douilles en métal dur est supérieure à la conicité de la zone terminale de tête faiblement conique (24) de la broche de centrage (9a, 9b).

FIG. 1

EP 0 308 370 B1

FIG. 2

FIG. 3

FIG. 4

FIG. 5

FIG. 6

EP 0 308 370 B1